# EUROPEAN PATENT APPLICATION

(11) **EP 2 634 423 A2**
(43) Date of publication of application: **04.09.2013**
(21) Application number: 13157353.7
(22) Date of filing: 01.03.2013
(51) Int. Cl.: F03D 11/00

(54) **Downwind rotor type wind power generation device**

(30) Priority: 02.03.2012 JP 2012047140
(71) Applicant: Hitachi Ltd., Tokyo 100-8280 (JP)
(72) Inventor: Tobinaga, Ikuo, Tokyo, 100-8220 (JP)
(74) Representative: MERH-IP Matias Erny Reichl Hoffmann

(57) **Abstract**

A downwind rotor type wind power generation device (100) which allows a nacelle (104) to be transported and installed more conveniently without the need for troublesome detachment and reattachment of a heat exchanger (134) and also improves the efficiency in cooling a generator (124). The downwind rotor type wind power generation device (100) includes a rotor (102) having a hub (112) and a plurality of blades (114) extending radially from the hub, a nacelle (104) having a generator (124) for converting the rotational energy of the rotor into electric energy and a heat exchanger (134) for exchanging heat with heat generated at least by the generator and supporting the rotor rotatably, and a tower (106) supporting the nacelle rotatably around a vertical axis (160) so that the rotor is positioned downwind. The heat exchanger is located on the opposite side of the rotor with respect to the vertical axis and exposed.

## Description

### [Technical Field]

The present invention relates to downwind rotor type wind power generation devices in which a rotor is positioned downwind of a nacelle.

### [Background Art]

Efforts have been continued to develop so-called wind power generation devices which use wind as an inexhaustible source of energy available in nature and convert the wind energy into electric energy. A wind power generation device is a relatively large structure and the site where it can be installed is limited, so the amount of electricity generated per device is expected to increase so that a smaller number of devices generate as much electricity as desired. In order for a single wind power generation device to generate a larger amount of electricity, its generator and step-up gear must be larger and the heat generated by the generator and step-up gear (energy loss) will increase, so it is necessary to increase the capacity of its cooling unit.

As a solution, a technique which uses a fan to send air from the rear portion of a nacelle housing a generator and a step-up gear to its front portion to cool the inside of the nacelle is disclosed (for example, JP-A-2010-116925 (PTL 1)) and also a technique which uses cooling fans located in upper and rear portions of a nacelle is disclosed (for example, JP-A-2008-286115 (PTL 2)).

However, when the external air is forced to be taken in by a fan, a fan and power to drive the fan are needed and the reliability and maintainability of the fan must be considered. So, an upwind rotor type wind power generation device in which a radiator (heat exchanger) is located behind the rotor to cool the generator and step-up gear by heat exchange is disclosed (for example, JP-A-2011-112051 (PTL 3)).

### [Citation List]

### [Patent Literature]

- [PTL 1]: JP-A-2010-116925
- [PTL 2]: JP-A-2008-286115
- [PTL 3]: JP-A-2011-112051

### [Summary of Invention]

### [Technical Problem]

The above wind power generation devices described in PTL 1 to 3 are so-called upwind rotor type wind power generation devices in which a rotor is positioned upwind of a nacelle fixed on a tower. In this type of wind power generation devices, in order to expose the heat exchanger to the external air, the heat exchanger must protrude outward from the periphery of the nacelle. However, under the road traffic law, a nacelle with a heat exchanger protruding like this is not permitted to be transported from the factory to the installation site. Therefore, it is necessary to remove the heat exchanger before transportation and attach it again at the installation site, resulting in increased transportation and installation costs. For this reason, in the technique described in PTL 3, the heat exchanger can turn so that at the time of transportation and installation it is retracted from the periphery of the nacelle so as not to protrude from the nacelle. However, this retraction structure requires a large-scale mechanism, which is a contributory factor for a rise in manufacturing cost and a decline in the freedom of nacelle design.

In addition, upwind rotor wind type power generation devices have a problem that since the heat exchanger must be located backward of the rotor, the rotor reduces the wind energy and the generator and step-up gear cannot be cooled sufficiently.

The present invention has been made in view of the above problem and has an object to provide a downwind rotor type wind power generation device which allows a nacelle to be transported and installed more conveniently without the need for troublesome detachment and reattachment of a heat exchanger and improves the efficiency in cooling a generator.

### [Solution to Problem]

According to an aspect of the present invention, in order to solve the above problem, there is provided a downwind rotor type wind power generation device which includes a rotor having a hub and a plurality of blades extending radially from the hub, a nacelle having a generator for converting the rotational energy of the rotor into electric energy and a heat exchanger for exchanging heat with heat generated at least by the generator and supporting the rotor rotatably, and a tower supporting the nacelle rotatably around a vertical axis so that the rotor is positioned downwind. The heat exchanger is located on the opposite side of the rotor with respect to the vertical axis in the nacelle so as to be exposed.

With the heat exchanger located in the nacelle, external dimensions of the heat exchanger may be within peripheral dimensions of the nacelle.

The downwind rotor type wind power generation device may further include a front cover located on the opposite side of the rotor with respect to the vertical axis and over the heat exchanger to prevent light from entering the heat exchanger from above.

The downwind rotor type wind power generation device may further include a side cover which is located on the opposite side of the rotor with respect to the heat exchanger and extends in the axial direction of the rotor.

The downwind rotor type wind power generation device may further include a lifting device which is located over the heat exchanger and can lift and lower the heat exchanger.

### [Advantageous Effects of Invention]

According to the present invention, the nacelle can be transported and installed more conveniently without the need for troublesome detachment and reattachment of the heat exchanger and the efficiency in cooling the generator can be improved.

### [Brief Description of Drawings]

Fig. 1 is an external view showing an appearance of a downwind rotor type wind power generation device;
Fig. 2 is a functional block diagram illustrating the general functionality of the downwind rotor type wind power generation device;
Fig. 3 is a perspective view of a nacelle as seen from below;
Fig. 4 is a perspective view of the nacelle as seen from below;
Figs. 5A and 5B are bottom views illustrating how the side covers work, in which Fig. 5A shows the side covers turned so as to decrease the area of an opening and Fig. 5B shows the side covers turned so as to increase the area of the opening;
Fig. 6 illustrates the location and position of the heat exchanger; and
Fig. 7 is a graph which explains the rotation speed of an impeller.

### [Description of Embodiments]

Next, the preferred embodiment of the present invention will be described in detail referring to the accompanying drawings. The dimensions, materials, specific numerical values and other details given below in the description of the preferred embodiment are just illustrative examples for the better understanding of the invention and do not limit the invention. In this specification and the drawings, elements with virtually identical functions or structures are designated by like reference numerals and repeated descriptions of such elements are omitted. Also, elements which are not directly associated with the present invention are omitted in the drawings.

### (Downwind Rotor Type Wind Power Generation Device 100)

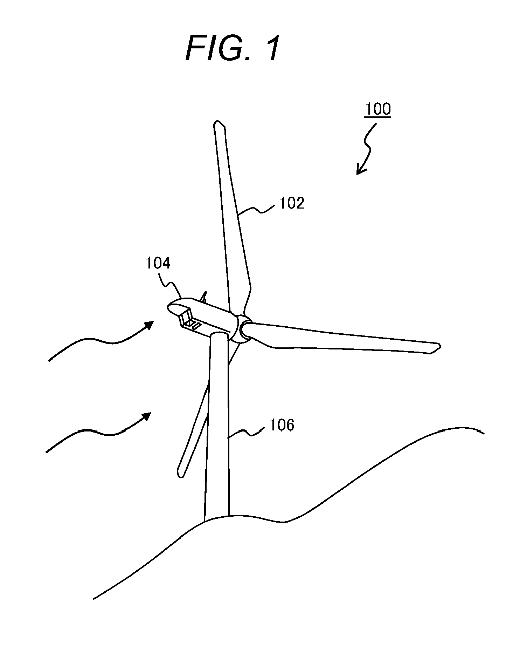

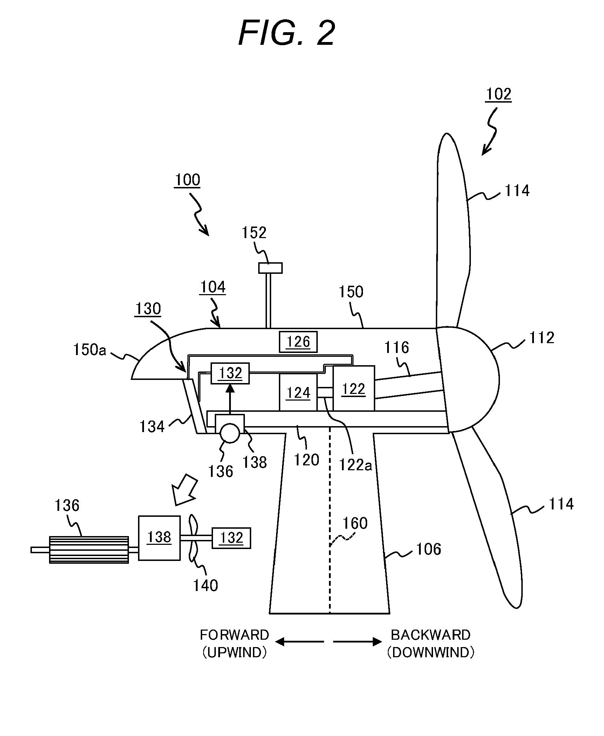

Fig. 1 is an external view showing an appearance of a downwind rotor type wind power generation device 100 and Fig. 2 is a functional block diagram illustrating the general functionality of the downwind rotor type wind power generation device 100. Hereinafter the terms "frontward" and "backward" (as shown in Fig. 2) are sometimes used in the explanation of positional relationship of components of the downwind rotor type wind power generation device 100. Since the downwind rotor type wind power generation device 100 is so designed that its tip portion is oriented upwind, it may be thought that "frontward" corresponds to upwind and "backward" corresponds to downwind.

As shown in Fig. 1, the downwind rotor type wind power generation device 100 includes a rotor 102, a nacelle 104, and a tower 106.

As shown in Fig. 2, the rotor 102 includes a hub 112, a plurality of blades 114 extending radially from the hub 112, and a rotor shaft 116 coupled to the hub 112, extending perpendicularly to a plane formed by the blades 114. As the wind hits the blades 114, due to its lift force the rotor 102 rotates around the rotor shaft 116.

The nacelle 104 includes a nacelle frame 120, a step-up gear 122, a generator 124, and a control board 126. The nacelle frame 120 includes a platform or structure to bear the weight load on the nacelle 104. The step-up gear 122 and the generator 124 are supported by the platform or structure of the nacelle frame 120. The step-up gear 122is pivotally supports the rotor shaft 116 and increases the rotation speed of the rotor shaft 116 to rotate another rotating shaft 122a. The step-up gear 122 and nacelle frame 120 rotatably support the rotor 102 in this way. The generator 124 is coupled to the rotating shaft 122a whose speed is increased by the step-up gear 122, so that the rotational energy of the rotor 102 is converted into electric energy. The control board 126 performs pitch control of the rotor 102 and electric power control of the generator 124.

In the process that the downwind rotor type wind power generation device 100 converts the wind energy into electric energy, heat is generated by energy loss of the generator 124 and step-up gear 122. In recent years, as the demand for increase in the amount of electricity generated has been growing, the amount of heat generated in the electricity generation process has been increasing. For this reason, a cooling unit 130 is required in order to prevent the electricity generating efficiency from declining due to heat generation.

In the cooling unit 130, refrigerant (gas or liquid) is pressurized by a circulating pump 132 and introduced into the generator 124 and step-up gear 122 to collect the heat generated by the generator 124 and step-up gear 122 before being conveyed to a heat exchanger 134 such as a radiator. In the heat exchanger 134, heat exchange between the hot refrigerant and the external air takes place and the refrigerant cooled by heat exchange is returned to the circulating pump 132. This circulation of refrigerant cools the generator 124 and step-up gear 122.

The cooling unit 130 includes an impeller 136, a step-up gear 138, and a cooling fan 140. The impeller 136 is rotatably supported by the nacelle 104. The step-up gear 138 increases the rotation speed of the impeller 136 to rotate another rotating shaft and directly drives the circulating pump 132 (gives pressure directly to the refrigerant by rotational energy). The cooling fan 140 is fixed on the rotating shaft of the impeller 136 or step-up gear 138 and rotates in a way to follow the rotation of the impeller 136 to stir the air inside the nacelle 104 and homogenize the atmospheric temperature in the nacelle 104. The cooling unit 130 will be described in more detail later.

A vane anemometer 152 which measures the direction and speed of the wind received by the downwind rotor type wind power generation device 100 is provided on a nacelle cover 150 which serves as an exterior of the nacelle 104.

The tower 106 is coupled virtually to the center of gravity of the rotor 102 and nacelle 104 and supports the nacelle 104 rotatably around a vertical axis 160. The rotor 102 is coupled to the nacelle 104 and as the blades 114 of the rotor 102 receive the wind, the nacelle 104 turns so that the rotor 102 is positioned downwind of the tower 106. Thus, in the downwind rotor type wind power generation device 100, the wind energy is utilized to make the virtual plane formed by the blades 114 of the rotor 102 perpendicular to the direction in which the wind flows so that the wind energy can be captured efficiently.

### (Cooling Unit 130)

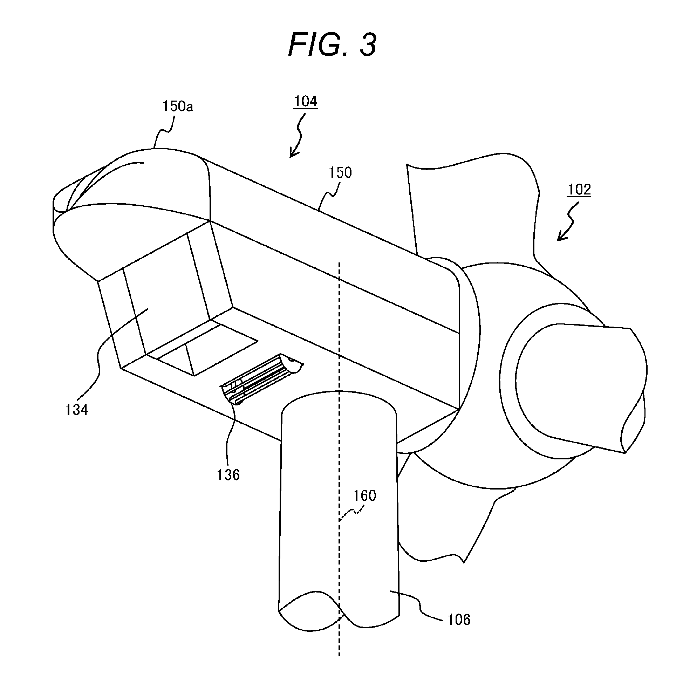

Fig. 3 is a perspective view of the nacelle 104 as seen from below. The heat exchanger 134 is located on the opposite side of the rotor 102 (front portion of the nacelle 104) with respect to the vertical axis 160 and in a lower portion of the nacelle 104 and exposed to the external air. In this embodiment, the heat exchanger 134 is inclined so that a lower portion thereof has a shorter distance from the vertical axis 160. However the way the heat exchanger 134 is positioned in relation to the nacelle 104 is not limited thereto and it may be positioned vertically upright or in other various ways.

For not only the downwind rotor type wind power generation device 100 but also other types of wind power generation devices, it is desirable to use large blades 114 in order to capture the wind energy efficiently, which means that the external dimensions of the nacelle 104 should be large enough. For example, if the external dimensions of the nacelle 104 are close to the size limit for transportation under the road traffic law (for example, 4.5 m in height x 4.5 m in width), the size limit would be exceeded by a protruding body attached to the periphery to the nacelle 104. In that case, it is necessary to once detach the heat exchanger as a protruding body from the nacelle after operation check of the nacelle and reattach it at the installation site of the wind power generation device. In particular, since the heat exchanger 134 is required to exchange heat with the external air directly, it must be exposed to the external air outside the nacelle 104, but if it is simply reattached to the periphery of the nacelle 104, transportation and installation costs would rise. In addition, its reattachment at the installation site might cause quality deterioration.

In this embodiment, the heat exchanger 134 is located on the upwind side tip of the nacelle 104, taking advantage of the special feature of the downwind rotor type wind power generation device 100 that the rotor 102 is located on the downwind side. When the heat exchanger 134 is located on the upwind side tip of the nacelle 104 in this way, the external dimensions of the heat exchanger 134 is within the peripheral dimensions of the nacelle 104 and the dimensions (width and height) of the periphery of the nacelle 104 (in the circumferential direction of the rotor shaft 116) remain unchanged regardless of whether or not the heat exchanger 134 is attached. In other words, the peripheral dimensions of the nacelle 104 are kept within the legal size limit even when the heat exchanger 134 is not detached. Therefore, the nacelle 104 can be transported with the heat exchanger 134 attached thereto and there is no need for detachment and reattachment of the heat exchanger 134 at the time of transportation and installation. This resolves the problems of increased installation cost and quality deterioration.

Furthermore, in an upwind rotor type wind power generation device, even if a heat exchanger is used, the heat exchanger must be positioned downwind of the rotor and due to interference by the rotor, it can only receive, for example, about 50% of the wind energy received by the rotor, so it cannot provide sufficient cooling efficiency. By contrast, in the downwind rotor wind type power generation device 100, the heat exchanger 134 receives the wind energy on the most upwind side of the nacelle 104, so the wind energy is not attenuated and a higher cooling efficiency is achieved.

The heat exchanger 134, exposed from the nacelle 104, passively receives the external air and does not require a means to take in the external air forcedly, such as a fan, thereby contributing to cost reduction, decrease in the number of components, and improvement in design freedom.

In the above structure, the rotor 102 is positioned downwind of the heat exchanger 134. However, as mentioned above, the heat exchanger 134 does not protrude from the periphery of the nacelle 104 and the wind energy which the rotor 102 receives is not attenuated. Even if the wind energy is attenuated by the heat exchanger 134, the point at which the wind force is applied is outside the rotation of the blades 114, so the amount of wind energy in the rotation center scarcely affects the amount of electricity generated. For this reason, there is no problem with the structure in which the rotor 102 is positioned downwind of the heat exchanger 134.

### (Front Cover 150a)

In an upwind rotor type wind power generation device, the heat exchanger must be located over the nacelle and in a fine weather it is easily affected by the sunlight and due to the sunlight heat it cannot provide sufficient cooling efficiency. On the other hand, in the downwind rotor type wind power generation device 100, as shown in Fig. 3, a front cover 150a as a constituent part of the nacelle cover 150 is located in a forward position of the nacelle 104 (on the opposite side of the rotor 102 with respect to the vertical axis 160) and over the heat exchanger 134 to prevent the sunlight from entering the heat exchanger 134 from above. Therefore, the heat exchanger 134 can efficiently receive the wind from forward of the nacelle 104 and provide a higher cooling efficiency while avoiding the influence of the sunlight from above.

Generally in wind power generation devices, a vane anemometer is provided to ensure that electricity is stably generated with high efficiency. In order to detect the direction of the wind and its speed accurately, it is desirable that the vane anemometer be located on the periphery of the nacelle 104 and over the nacelle 104. However, when the heat exchanger 134 is provided simply on the upwind side of the nacelle 104, the heat exchanger 134 might make the wind flow over the nacelle 104 turbulent at the tip portion of the nacelle 104. In this embodiment, the front cover 150a has a curved surface whose curvature radius changes gradually, so that the wind from forward is rectified and disturbance in the direction and speed of the wind over the tip portion of the nacelle 104 is minimized. As a consequence, the vane anemometer 152 can ensure high accuracy in measurement.

### (Side Covers 150b)

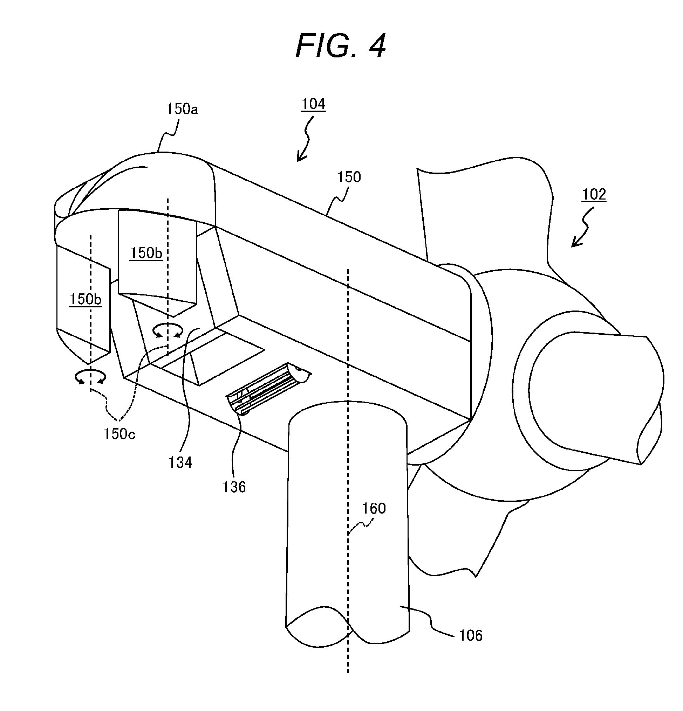

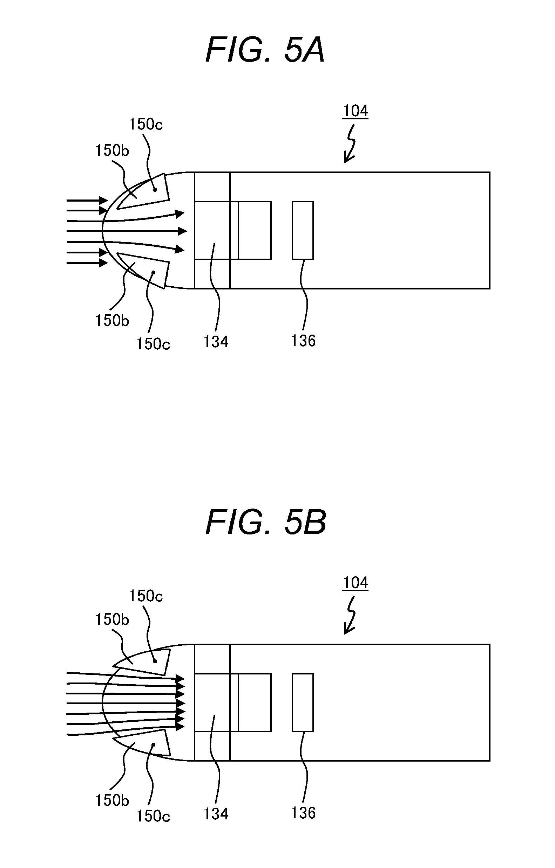

Fig. 4 is a perspective view of the nacelle 104 as seen from below and Figs. 5A and 5B are bottom views illustrating how side covers 150b work. In this embodiment, the side covers 150b extending in the direction of the rotor shaft 116 may be provided in a lower part of the tip portion of the nacelle 104 (on the opposite side of the rotor with respect to the heat exchanger 134) and upwind of the heat exchanger 134. Each of these side covers 150b is fixed on the nacelle 104 or attached rotatably around a vertically extending rotation axis 150c to regulate the air volume.

For example, if the force of wind is too strong, the side covers 150b are turned around the rotation axes 150c as shown in Fig. 5A so as to decrease the area of the upwind side opening and produce a reducer effect to decrease the speed of the wind received by the heat exchanger 134 and alleviate the wind load on the heat exchanger 134 in the strong wind.

Conversely, the side covers 150b are turned around the rotation axes 150c as shown in Fig. 5B to increase the area of the upwind side opening so that the wind forward of the nacelle 104 is collected as indicated by arrows in Fig. 5B and the introduced air is led into the heat exchanger 134 without leakage. Therefore, even in a weak wind, the heat exchanger 134 can provide a higher cooling efficiency.

### (Nacelle Frame 120)

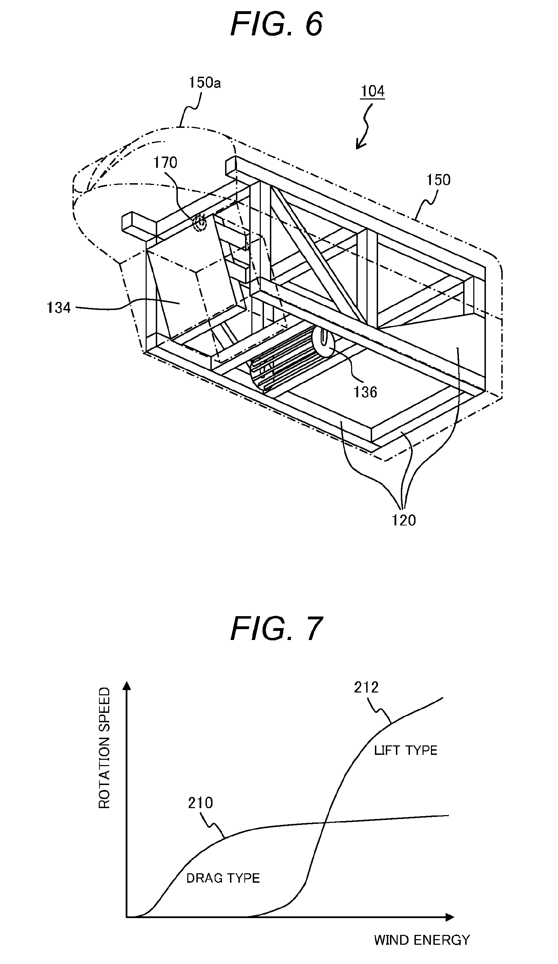

Fig. 6 illustrates the location and position of the heat exchanger 134. As shown in Fig. 6, the nacelle frame 120 is located inside the nacelle 104. In this embodiment, the heat exchanger 134 is fixed on the nacelle frame 120 directly or indirectly through a bracket or the like so that the heat exchanger 134 is supported firmly.

### (Lifting Device 170)

The heat exchanger 134 is connected to various circuits of the cooling unit 130 such as the circulating pump 132 through joints and can be detached for maintenance or replacement of the heat exchanger 134. As shown in Fig. 6, a lifting device 170 which can lift and lower the heat exchanger 134 while supporting it in a tensioned state is provided over the heat exchanger 134 inside the nacelle 104, so that the heat exchanger 134 can be vertically lifted or lowered directly without being moved horizontally from the tip portion of the nacelle 104.

### (Impeller 136)

In the cooling unit 130, the circulating pump 132 circulates the refrigerant between the generator 124 and step-up gear 122 and the heat exchanger 134. A large amount of electricity is required to drive the circulating pump 132. In this embodiment, electricity is not supplied to the circulating pump 132 and instead the circulating pump 132 is driven directly by the torque of the impeller 136.

In this embodiment, the impeller 136 is located at a lower part of the tip portion of the nacelle 104 and downwind of the heat exchanger 134 as shown in Fig. 3. Like the heat exchanger 134, the impeller 136 is located at the tip portion of the nacelle 104 so that it can directly receive the wind energy not attenuated and thus the circulation efficiency of the circulating pump 132 (coolingefficiency of the coolingunit 130) canbe improved.

Since the nacelle frame 120 is located in a lower portion of the nacelle 104 as shown in Fig. 6, the impeller 136 can be supported rotatably without the need for a special fixing member. This means that the nacelle 104 can be constructed at low cost and light in weight. It may be possible that the impeller 136 is located not at the lower portion of the nacelle 104 but at a lateral side of it, but if that is the case, depending on the orientation (rotation angle) of the nacelle 104, the lateral side of the nacelle 104 would become an obstacle and the air volume (force of wind) which the impeller 136 receives would vary. If the impeller 136 is located at a upper portion of the nacelle 104, it might make the wind flow over the nacelle 104 turbulent, resulting in deterioration in the measuring accuracy of the vane anemometer 152. If the impeller 136 is located downwind of the vane anemometer 152, the wind energy would be attenuated by interference by the vane anemometer 152 and sufficient cooling efficiency might not be achieved. Therefore, it is desirable that the impeller 136 be located at a lower portion of the nacelle 104.

Fig. 7 is a graph which explains the rotation speed of the impeller 136. This embodiment uses a drag type impeller 136. It is known that when the drag type impeller 136 is used, the rotation speed 210 relative to the wind energy is somewhat higher than the rotation speed 212 of a lift type impeller while the wind energy is small. This means that even when the wind is weak, the circulating pump 132 can be driven and a desired cooling capacity can be obtained.

When the rotor 102 is rotating at high speed (high load), namely when the wind is strong, the impeller 136 is also rotating at high speed, so the circulation efficiency of the circulating pump 132 is higher and the generator 124 and step-up gear 122 are cooled at a higher cooling efficiency. Therefore, in this embodiment, the cooling efficiency varies according to the amount of electricity generated by the downwind rotor type wind power generation device 100, so the cooling unit 130 works effectively without a special cooling control means. Also the cooling fan 140 rotates in a way to follow the rotation of the impeller 136, so the air inside the nacelle 104 can be properly stirred according to the amount of electricity generated by the downwind rotor type wind power generation device 100.

Furthermore, in its principle the drag type impeller 136 cannot attain a higher rotation speed than the wind speed. As shown in Fig. 7, after the wind energy exceeds a given level, the rotation speed does not increase in a similar pattern. Taking advantage of the drag type impeller's feature that the rotation speed cannot be high even when the wind energy is high, this embodiment prevents an excessive load from being applied to the impeller 136 even in a strong wind such as a typhoon and ensures safety without a special means to suppress the rotation speed and drives the circulating pump 132 stably.

In order to use the drag type impeller 136, this embodiment adopts a vertical-axis wind turbine (Savonius or cross-flow type) in which the rotating shaft of the impeller is perpendicular to the direction of the wind. Here, the rotating shaft of the impeller 136 is disposed on a horizontal plane of the nacelle 104 along the width direction of the nacelle 104. Therefore, the rotating shaft of the impeller 136 is orthogonal to the rotor shaft 116.

Generally, if the impeller 136 whose rotating shaft is perpendicular to the direction of the wind as in a vertical-axis wind turbine is located with its rotating shaft horizontal, the vertical-axis wind turbine's advantage that it does not depend on the direction of the wind would be lost. However, in the downwind rotor type wind power generation device 100, as the blades 114 of the rotor 102 receives the wind, the rotor 102 turns in a way that it is positioned downwind of the tower 106 and thus the nacelle 104 copes with change in the direction of the wind so that sufficient wind energy is supplied to the impeller 136.

In this embodiment, since the rotating shaft of the impeller 136 is disposed along the width direction of the nacelle 104 horizontally, both ends of the rotating shaft can be supported rotatably by the nacelle frame 120 as shown in Fig. 6. Therefore, the impeller 136 can be securely fixed and the cooling unit 130 can ensure high reliability and high stability.

When the ends of the rotating shaft of the impeller 136 are supported as mentioned above, the upper half of the impeller 136 is covered by the nacelle cover 150. In this case, when the impeller 136 rotates, the upper half of the impeller 136 does not receive the wind while turning back toward the upwind direction. In other words, the wind hits only the impeller portion whose rotation direction is the same as the direction of the wind and does not hit the impeller portion whose rotation direction is reverse to the direction of the wind. This contributes to improvement in cooling efficiency.

In this embodiment, since the heat exchanger 134 is positioned in an inclined state as shown in Fig. 3, the wind is easily led to the impeller 136 and the cooling efficiency is improved.

According to the downwind rotor type wind power generation device 100 as mentioned above, the nacelle 104 can be transported and installed conveniently without the need for troublesome detachment and reattachment of the heat exchanger 134 and also the efficiency in cooling the generator 124 and step-up gear 122 can be improved.

Furthermore, the cooling unit 130 saves the electricity to drive the circulating pump 132 for circulating the refrigerant and properly cools the generator 124 and step-up gear 122 at a cooling efficiency depending on the amount of electricity generated by the downwind rotor type wind power generation device 100.

So far the preferred embodiment of the present embodiment has been described referring to the accompanying drawings, but obviously the invention is not limited thereto. It is apparent that a person skilled in the art can conceive of various changes andmodifications thereto within the scope of the appended claims and such changes andmodifications are interpreted to fall within the technical scope of the present invention.

For example, although the impeller 136 includes the step-up gear 138 in the above embodiment, the invention is not limited thereto. The step-up gear 138 can be omitted.

Furthermore, the above embodiment includes the step-up gear 122 but the invention is not limited thereto. Another embodiment of the invention may not include the step-up gear 122, or may include a hydraulic gearbox instead of the step-up gear 122, or may include both the step-up gear 122 and a hydraulic gearbox.

### [Industrial Applicability]

The present invention can be applied to a downwind rotor wind power generation device in which a rotor is positioned downwind of a nacelle.

### [Reference Signs List]

| | |
|---|---|
| 100 | Downwind rotor type wind power generation device |
| 102 | Rotor |
| 104 | Nacelle |
| 106 | Tower |
| 112 | Hub |
| 114 | Blade |
| 116 | Rotor shaft |
| 120 | Nacelle frame |
| 122 | Step-up gear |
| 124 | Generator |
| 134 | Heat exchanger |
| 136 | Impeller |
| 138 | Step-up gear |
| 140 | Cooling fan |
| 150 | Nacelle cover |
| 150a | Front cover |
| 150b | Side cover |
| 170 | Lifting device |

## Claims

1. A downwind rotor type wind power generation device (100) comprising:
a rotor (102) having a hub (112) and a plurality of blades (114) extending radially from the hub;
a nacelle (104) having a generator (124) for converting rotational energy of the rotor into electric energy and a heat exchanger (134) for exchanging heat with heat generated at least by the generator and supporting the rotor rotatably; and
a tower (106) supporting the nacelle rotatably around a vertical axis (160) so that the rotor is positioned downwind,
wherein the heat exchanger is located on an opposite side of the rotor with respect to the vertical axis in the nacelle so as to be exposed.

2. The downwind rotor type wind power generation device according to Claim 1, wherein with the heat exchanger located in the nacelle, external dimensions of the heat exchanger are within peripheral dimensions of the nacelle.

3. The downwind rotor type wind power generation device according to Claim 1 or 2, further comprising a front cover (150a) located on the opposite side of the rotor with respect to the vertical axis and over the heat exchanger to prevent light from entering the heat exchanger from above.

4. The downwind rotor type wind power generation device according to any one of Claims 1 to 3, further comprising a side cover (150b) which is located on the opposite side of the rotor with respect to the heat exchanger and extends in an axial direction of the rotor.

5. The downwind rotor type wind power generation device according to any one of Claims 1 to 4, further comprising a lifting device (170) which is located over the heat exchanger and is configured to lift and lower the heat exchanger.
